(19) Europäisches Patentamt / European Patent Office / Office européen des brevets

(11) EP 2 131 236 A1

(12) EUROPEAN PATENT APPLICATION

(43) Date of publication:
09.12.2009 Bulletin 2009/50

(51) Int Cl.:
G03B 9/02 (2006.01)

(21) Application number: 09161449.5

(22) Date of filing: 28.05.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 03.06.2008 JP 2008145600

(71) Applicant: Olympus Corporation
Shibuya-ku
Tokyo 151-0072 (JP)

(72) Inventor: Okita, Tatsuhiko
Tokyo 151-0072 (JP)

(74) Representative: Winter, Brandl, Fürniss, Hübner
Röss, Kaiser,
Polte Partnerschaft Patent- und
Rechtsanwaltskanzlei
Alois-Steinecker-Strasse 22
85354 Freising (DE)

(54) **Stacked structure, light controlling apparatus, and method of manufacturing stacked structure**

(57) A stacked structure which includes at least one movable member which is movable, and a guide shaft which regulates a movement of the movable member, and which is manufactured by using a metal layer formation process and an etching process, is for manufacturing an ultra-small variable aperture apparatus as a stacked structure by using a plating process, other metal-layer formation process, and the etching process, and for making small a shaking of a diaphragm blade as a movable member, which is caused due to the clearance around the shaft. A groove portion having a first distance and a groove portion having a second distance are formed continuously in the movable member, and the second distance is smaller than the first distance. A guide shaft regulates a movement of the movable member along the groove portion having the second distance.

FIG. 1

EP 2 131 236 A1

## Description

BACKGROUND OF THE INVENTION

Field of the Invention

The present invention relates to a stacked structure, a light controlling apparatus, and a method of manufacturing stacked structure.

Description of the Related Art

In an endoscope apparatus in which a solid image pickup element is used, in recent years, with a progress of a semiconductor manufacturing technology, it has been possible to use a solid image pickup element having fine pixels. However, the solid image pickup element having the fine pixels is sensitive to a change of a focal position due to a distance up to an object to be photographed, and in an endoscope in which an optical system of a conventional fixed focus and a fixed diaphragm is used, even when the image pickup element having the fine pixels is used, it has been difficult to achieve a high-definition image. As a method for avoiding this problem, a method of adding a focus adjustment function by making a lens to be displaced, and a method of achieving a favorable imaging by making small an aperture diameter at the time of near-point photography and increasing a depth of focus, by adjusting such that an optical system is capable of having an appropriate imaging for a far-point photography object at a fixed focus, are available. In a case of the latter method, a variable aperture mechanism is necessary, and there is a problem that at the time of near-point photography, an amount of light reaching the solid image pickup element decreases. However, in an endoscope which takes photographs by light of a lighting system at a front-end portion normally, since it is possible to secure a sufficient amount of light at the time of near-point image pickup, it is not a major problem.

To make the most of such capability of the image pickup element of the fine pixels, one of a lens driving unit and a variable aperture unit is necessary. Although the lens driving unit is superior optically, incorporating the lens driving unit in an endoscope of a thin diameter is a rather difficult task. Therefore, it is desirable to use an ultra-small variable aperture unit in the endoscope having a thin diameter. Regarding manufacturing of such ultra-small variable aperture unit which can be used in such endoscope, manufacturing of a complicated structure is difficult by conventional machining technology such as press working and cutting, and also an assembling process is necessary after machining of each component. Furthermore, for further size reduction, or for manufacturing a complicated structure, it is necessary to use a technology for manufacturing a stacked body by a plating process and an etching process.

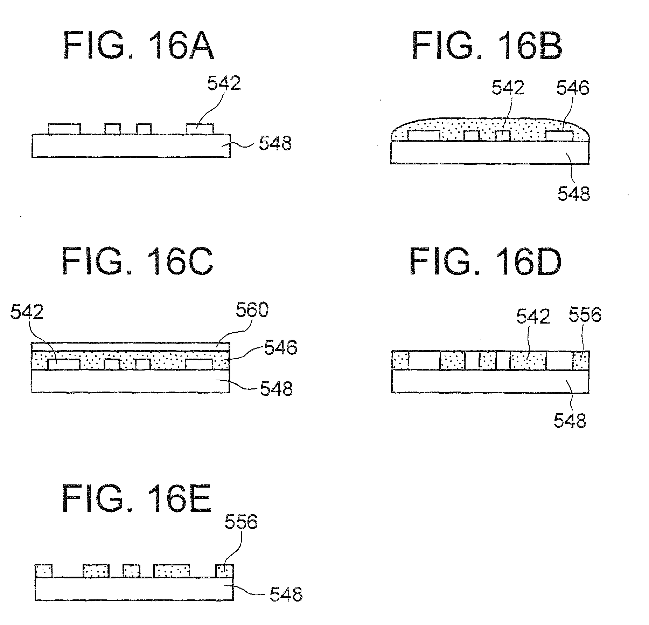

As a technology for manufacturing a stacked body by the plating process and the etching process, a method, articles, and an apparatus for electrochemical fabrication have been proposed in Japanese Patent Application Laid-open Publication No. 2001-355095. Fig. 16 is a diagram showing a manufacturing process of a conventional stacked structure. As shown in Fig. 16, in the method of manufacturing electroplating articles described in Japanese Patent Application Laid-open Publication No. 2001-355095, after a photoresist 542 is formed on a supporting material 548 (Fig. 16A), a masking material 546 in a liquid form is stacked on the supporting material 548 and the photoresist 542 (Fig. 16B). Next, a sheet 560 is pressed on the masking material 546 (Fig. 16C). At this time, a pressure which pushes out the masking material 546 between the sheet 560 and the photoresist 542 is applied to the sheet 560. Thereafter, a mask 556 is formed by hardening the masking material 546, and the sheet 560 is removed (Fig. 16D). Furthermore, when the photoresist 542 is removed, an electroplating article having a pattern formed by the mask 556 on the supporting material 548 is achieved (Fig. 16E).

The method described in Japanese Patent Application Laid-open Publication No. 2001-355095 is suitable for size reduction and manufacturing a complicated structure. However, in the manufacturing method, a clearance between a shaft hole which is formed in a movable member of the variable aperture unit and a shaft which regulates a movement of the movable member has to be made substantial, and when the movable member undergoes movement as it is, the movement lacks smoothness, which is a demerit. Regarding manufacturing of an ultra-small variable aperture unit which can be used in an endoscope, when a diaphragm blade, as a movable member, the movement lacks smoothness, it is not possible to carry out the control of the amount of light precisely.

SUMMARY OF THE INVENTION

The present invention is made in view of the abovementioned problems, and an object of the present invention is to manufacture an ultra-small variable aperture unit as a stacked structure by using a plating process and other metal layer formation process, and an etching process and other metal layer removing process, as well as it is possible to make smooth the movement of a diaphragm blade as a movable member due to the clearance around the guide shaft.

To solve the abovementioned issues and to achieve the object, according to the present invention, there is provided a stacked structure including
at least one movable member which is movable, and
a guide shaft which regulates a movement of the movable member, and
the stacked structure is manufactured by using a metal layer formation process and an etching process, and
a groove portion having a first distance and a groove potion having a second distance are formed continuously in the movable member, and

the second distance is smaller than the first distance, and the guide shaft regulates the movement of the movable member along the groove portion having the second distance.

In the stacked structure according to the present invention, it is preferable that the groove portion having the first distance has a first inscribed circle which is inscribed in the groove portion, and the second groove portion having the second distance has a second inscribed circle which is inscribed in the groove portion, and that a diameter of the first inscribed circle is the first distance, and a diameter of the second inscribed circle is the second distance.

In the stacked structure according to the present invention, the stacked structure may be covered by a frame member, which is larger than the stacked structure.

In the stacked structure according to the present invention, it is preferable that the groove portion having the first distance and the groove portion having the second distance have a substantially circular planar shape and a substantially rectangular planar shape respectively, and are formed to be in mutual continuity.

A stacked structure of a light controlling apparatus according to the present invention has a substrate in which a first optical aperture is formed, and at least one of the movable member includes an optical aperture which is smaller than the first optical aperture, and a shielding section, and the movable member, by undergoing a movement by being regulated by the guide shaft, switches to the first optical aperture formed in the substrate and the optical aperture formed in the movable member.

In the light controlling apparatus according to the present invention, at least one of the movable member undergoes a rotational movement upon being regulated by the guide shaft, and can switch to the first optical aperture formed in the substrate, and the optical aperture formed in the movable member.

A method of manufacturing stacked structure which is a method for manufacturing a stacked structure which includes at least one movable member which is movable, and a guide shaft which regulates a movement of the movable member, and which is manufactured by using a metal layer formation process and an etching process, includes

a step of forming continuously a groove portion having a first distance and a groove portion having a second distance, in the movable member,

a step of forming the guide shaft in the groove portion having the first distance, and

a step of moving a position of the guide shaft from the groove portion having the first distance to the groove portion having the second distance, by moving the movable member, and regulating the movement of the movable member.

The method of manufacturing stacked structure according to the present invention further includes a step of fitting the stacked structure in a frame member.

In the method of manufacturing stacked structure according to the present invention, it is preferable that the groove portion having the first distance and the groove portion having the second distance have a substantially circular planar shape and a substantially rectangular planar shape respectively, and are formed to be in mutual continuity.

BRIEF DESCRIPTION OF THE DRAWINGS

Fig. 1 is an exploded perspective view showing a structure of a light controlling apparatus according to a first embodiment of the present invention;
Fig. 2 is a perspective view showing a structure of a light controlling apparatus after assembling;
Fig. 3 is a plan view for explaining an example of a groove portion having a first distance and a groove portion having a second distance;
Fig. 4 is a plan view for explaining another example of a groove portion having a first distance and a groove portion having a second distance;
Fig. 5 is a top view showing a state of a movable member at a first stationary position;
Fig. 6 is a top view showing a state of the movable member at a second stationary position;
Fig. 7A, Fig. 7B, Fig. 7C, Fig. 7D, Fig. 7E, and Fig. 7G are cross-sectional views in a direction of height showing a structure of the stacked structure in various steps of a manufacturing process according to the first embodiment;
Fig. 8 is a top view showing a state before moving the movable member, after an etching;
Fig. 9 is a top view showing a state after the movable member is moved, after the etching;
Fig. 10 is an exploded perspective view showing an assembled state of the stacked structure and a frame member;
Fig. 11 is a perspective view showing a state of the light controlling apparatus after assembling;
Fig. 12A is a plan view showing a structure of a movable member according to a second embodiment of the present invention, and is a diagram showing a state before moving the movable member, after the etching, and Fig. 12B is a plan view showing a state after the movable member is moved, after the etching;
Fig. 13A is a plan view showing a structure of a movable member according to a modified embodiment of the second embodiment, and is a diagram showing a state before moving the movable member, after the etching, and Fig. 13B is a plan view showing a state after the movable member is moved, after the etching;
Fig. 14 is a top view showing a state before moving the movable member, after the etching, in a stacked structure according to a modified embodiment of the second embodiment and the first embodiment;

Fig. 15 is a top view showing a state after the movable member is moved, after the etching, in the stacked structure according to the modified embodiment of the second embodiment and the first embodiment; and

Fig. 16A, Fig. 16B, Fig. 16C, Fig. 16D, and Fig. 16E are diagrams showing a manufacturing process of a conventional stacked structure.

## DETAILED DESCRIPTION OF THE INVENTION

Exemplary embodiments of a stacked structure, a light controlling apparatus, and a method of manufacturing stacked structure according to the present invention will be described below in detail by referring to the accompanying diagram. However, the present invention is not restricted to the embodiments described below.

(First embodiment)

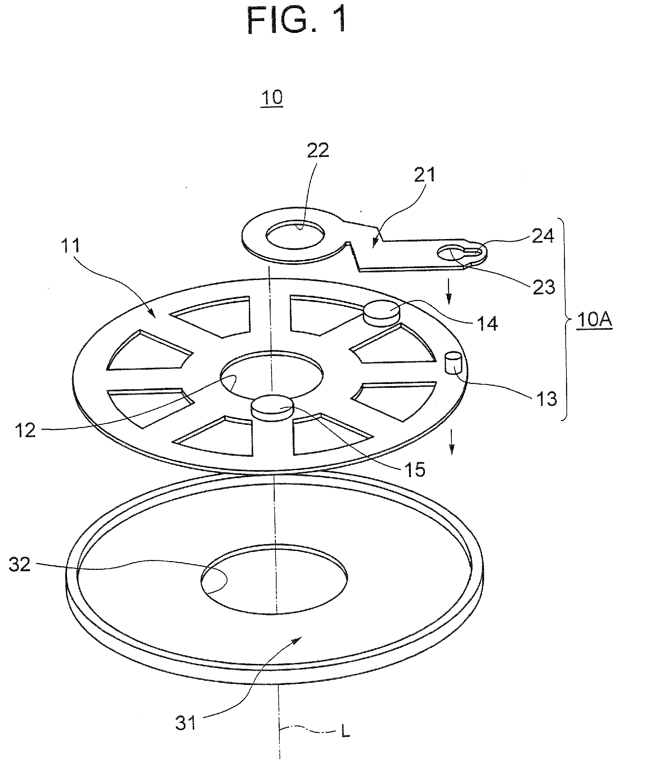

A stacked structure, a light controlling apparatus, and a method of manufacturing stacked structure according to a first embodiment of the present invention will be described below by referring to diagrams from Fig. 1 to Fig. 11.

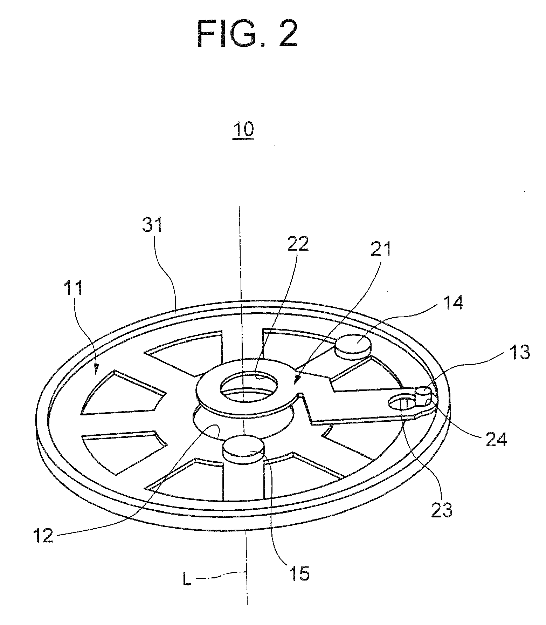

First of all, a structure of a light controlling apparatus 10 of the first embodiment will be described below by using Fig. 1 and Fig. 2. Here, Fig. 1 is an exploded perspective view showing the structure of the light controlling apparatus 10, and Fig. 2 is a perspective view showing a structure of the light controlling apparatus 10 after assembling.

As shown in Fig. 1, the light controlling apparatus 10 includes a substrate 11 in which a first aperture 12 is formed, a movable member 21 which is disposed at an upper side of the substrate 11, and in which, a second aperture 22 which is smaller than the first aperture 12 is formed, and a frame member 31 which is disposed at a lower side of the substrate 11, and in which, a third aperture 32 is formed. Here, a stacked structure 10A of the first embodiment includes the substrate 11 and the movable member 21.

The first aperture 12 and the third aperture 32 have a circular shape, and a center thereof is formed such that, an external shape in a plan view coincides with a center of the frame member 31 and the substrate 11 in the form of a circular plate. Moreover, the second aperture 22 is also formed to be circular shaped.

A guide shaft 13 and stoppers 14 and 15 are formed in the substrate 11, to be protruding upward. A first groove portion 23 and a second groove portion 24 are formed continuously in the movable member 21, to be cut through a direction of thickness. A distance (a first distance) of the first groove potion 23 is larger than a distance (a second distance) of the second groove portion 24. Moreover, the third aperture 32 larger than the first aperture 12 is formed in the frame member 31.

As shown in Fig. 2, the movable member 21 is coupled with the substrate 11 by inserting the guide shaft 13 into the second groove portion 24. The substrate 11 has been fitted in the frame member 31 such that the center of the first aperture 12 and the center of the third aperture 32 are on an optical axis L.

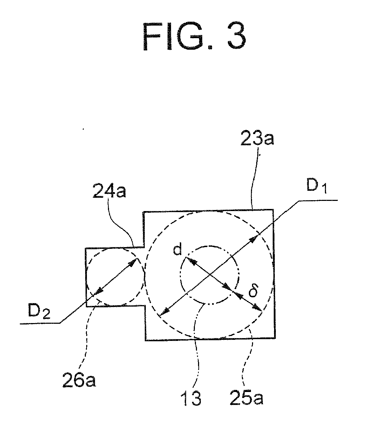

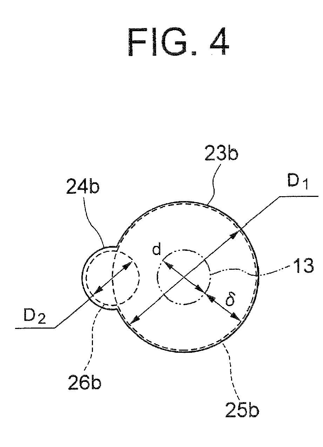

Here, the first distance of the first groove portion 23 and the second distance of the second groove portion 24 will be described below while referring to Fig. 3 and Fig. 4. Fig. 3 is a plan view for explaining an example of a groove portion having a first distance and a groove portion having a second distance, and Fig. 4 is a plan view for explaining another example of a groove portion having a first distance and a groove portion having a second distance.

In the present invention, the groove portion having the first distance has a first inscribed circle which is inscribed therein, and the groove portion having the second distance has a second inscribed circle which is inscribed therein. Furthermore, a diameter of the first inscribed circle is the first distance and a diameter of the second inscribed circle is the second distance. In the light controlling apparatus according to the first embodiment, the first groove portion 23 having a substantially circular planar shape has a first inscribed circle which is inscribed therein, and the second groove portion 24 having a substantially rectangular planar shape has a second inscribed circle inscribed therein. A diameter of the first inscribed circle is larger than a diameter of the second inscribed circle.

For the sake of convenience of explanation, the examples cited in Fig. 3 and Fig. 4 will be described below. However, when the first groove portion 23 and the second groove portion 24 have the first inscribed circle and the second inscribed circle as described above, the grooves may be let to have an arbitrary shape. Moreover, it is also possible to form the groove portion having the first distance and the groove portion having the second distance continuously via one or more grooves other than these grooves. It is preferable that the groove portion interposed between the groove portion having the first distance and the groove portion having the second distance has an inscribed circle which is inscribed therein, and a diameter thereof is larger than the second distance.

In the example shown in Fig. 3, a first groove portion 23a having a first distance is substantially square-shaped and a first inscribed circle 25a is inscribed therein. A second groove portion 24a having a second distance is substantially square-shaped and a second inscribed circle is inscribed therein. The first groove portion 23a and the second groove portion 24a are formed continuously at one side. The first distance and the second distance are diameters of the inscribed circles 25a and 26a inscribed in the first groove portion 23a and the second groove portion 24a, and satisfy the following expressions (1) and (2).

$$D1 - d = \delta \ \dots \ (1)$$

$$D2 - d \cong 0 \ \dots \ (2)$$

Here, $D1 > D2 > d \neq 0$, D1 is the diameter of the inscribed circle 25a inscribed in the first groove portion 23a, D2 is the diameter of the inscribed circle 26a inscribed in the second groove portion 24a, d is a diameter of the guide shaft 13, and $\delta$ is an amount of clearance equivalent to a hole extracted at the time of etching.

In the example shown in Fig. 4, a first groove portion 23b having a first distance is substantially circular shaped, and a first inscribed circle 25b is inscribed therein. A second groove portion 24b having a second distance has a substantially circular shape smaller than the first groove portion 23b, and a second inscribed circle 26b is inscribed therein. The first groove portion 23b and the second groove portion 24b are formed in continuity. The first distance and the second distance are diameters of the first inscribed circle 25b and the second inscribed circle 26b respectively, which are inscribed in the first groove portion 23b and the second groove portion 24b respectively, and satisfy the abovementioned expressions (1) and (2), similarly as in the example shown in Fig. 3.

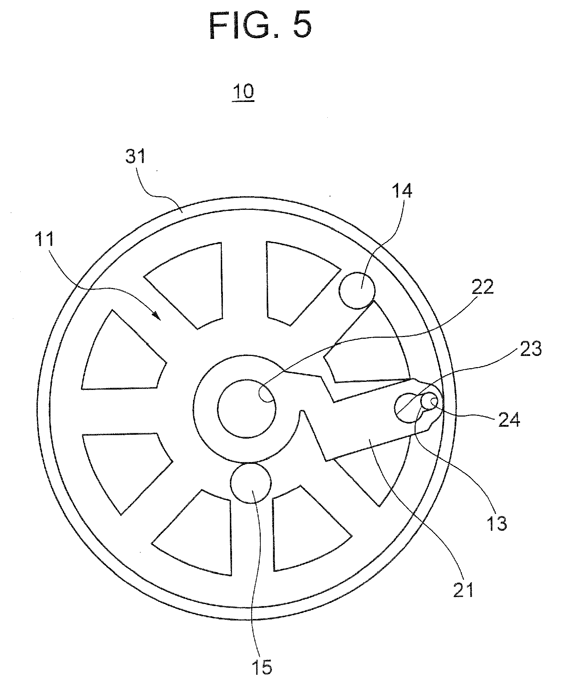

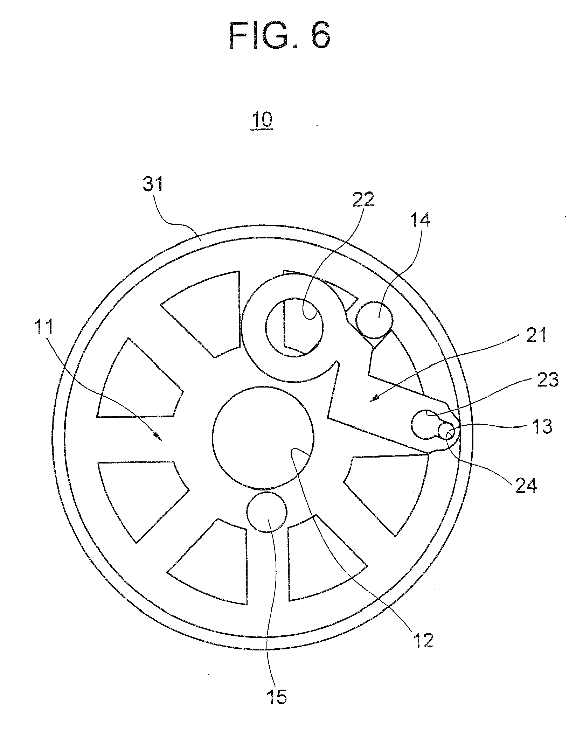

Next, an operation of the light controlling apparatus 10 will be described below by referring to Fig. 5 and Fig. 6. Fig. 5 is a top view showing a state of the movable member at a first stationary position. Fig. 6 is a top view showing a state of the movable member 21 at a second stationary position.

As shown in Fig. 5, the movable member 21, by making a contact with the stopper 15, is fixed at the first stationary position. In this state, the second aperture 22 formed in the movable member 21 becomes an optical aperture of the light controlling apparatus 10. The movable member 21 rotates around a central axis of the guide shaft 13, while an inner wall of the second groove portion 24 and the guide shaft 13 make a contact. In other words, the movable member 21 rotates while the movement thereof is being regulated, and makes a contact with the stopper 14 and stops at the second stationary position (Fig. 6). In this state, the first aperture 12 formed in the substrate 11 becomes the optical aperture of the light controlling apparatus 10.

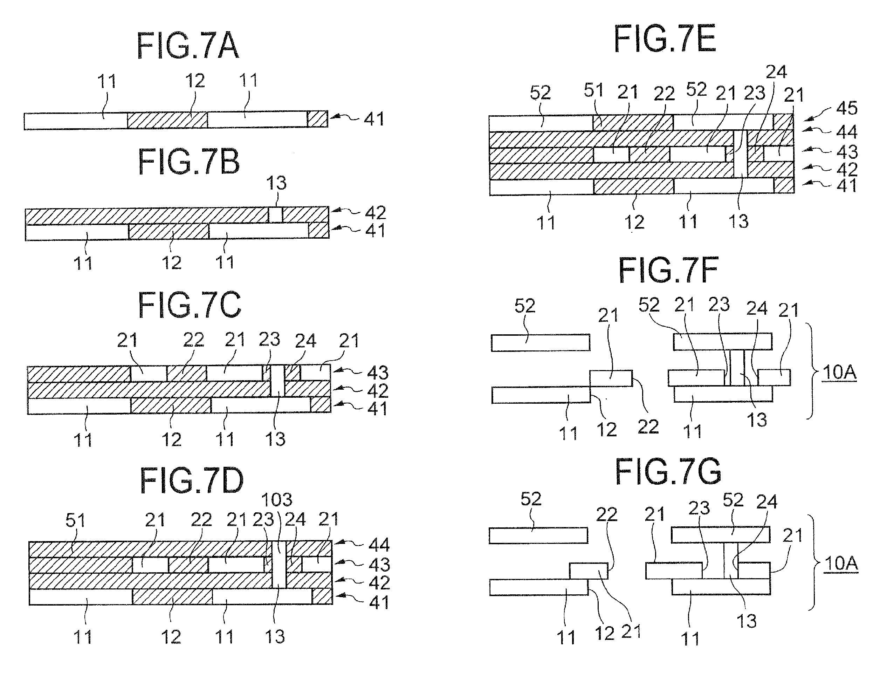

Next, a process of manufacturing the stacked structure 10A will be described below by referring to diagrams from Fig. 7A to Fig. 11. In the following description, a process of manufacturing the light controlling apparatus 10 in which a plating process and an etching process are used is described. However, a formation of a metal layer in the present invention is not restricted to the plating only, and can also be carried out by a process such as a vapor deposition and a semiconductor process.

Moreover, it is also possible carry out a removal of the metal layer by a method other than etching.

The process of manufacturing the stacked structure 10A is a process in which, a plated layer and a sacrificing layer are stacked, and by finally removing the sacrificing layer by etching, the plated layer is left, thereby providing the structure. Fig. 7A to Fig. 7G are cross-sectional views in a direction of height showing a structure of the stacked structure 10A in various steps of this manufacturing process. The description will be made in order of Fig. 7A to Fig. 7G. A portion shown by inclined lines in Fig. 7 is the sacrificing layer which is to be removed later by etching. Moreover, the stoppers 14 and 15 are omitted in the diagrams.

First of all, as shown in Fig. 7A, the substrate 11 is formed by the plated layer and the first aperture 12 is formed by the sacrificing layer (a first layer 41). Next, a second layer 42 is formed on the first layer 41. The second layer 42 forms the guide shaft 13 by the plated layer, and forms the other portion (the remaining portion) by the sacrificing layer (Fig. 7B). Next, on the second layer 42, the movable member 21 is formed by plating, and the second aperture 22, the first groove portion 23, and the second groove portion 24 are formed by the sacrificing layer (a third layer 43). At this time, the guide shaft 13 is formed in the first groove portion 23 by stacking further on the guide shaft 13 of the second layer 42 (Fig, 7C).

Furthermore, a fourth layer 44 is formed on the third layer 43 (Fig. 7D). The fourth layer 44 forms the guide shaft 13 by the plated layer on the guide shaft 13 of the second layer 42 and the third layer 43, and the other portion by the sacrificing layer. Next, as shown in Fig. 7E, it is also possible to form an upper substrate including a plated layer 52 and a sacrificing layer 51, as a fifth layer 45 for instance.

Next, the sacrificing layer (portion shown by inclined lines) is removed by etching (Fig. 7F). At this time, the guide shaft 13 is inside the first groove portion 23, and there is a distance equivalent to an amount of clearance of $\delta$ only from an inner wall of the first groove portion 23. Finally, by pressing the movable member 21 in a direction to make the center of the second aperture 22 in the movable member 21 and the center of the fist aperture 12 in the substrate coincide, the position of the guide shaft 13, with respect to the movable member 21, is moved from a position inside the first groove portion 23 to a position inside the second groove portion 24 (Fig. 7G).

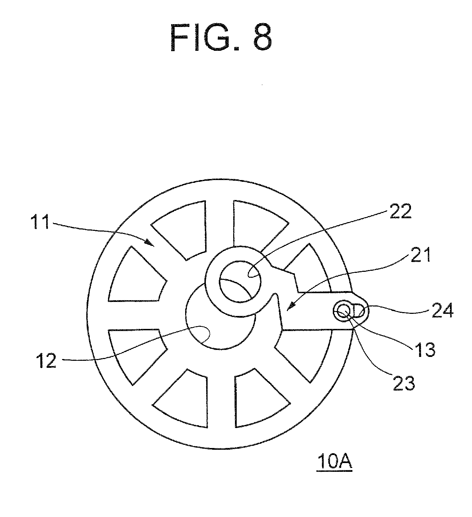

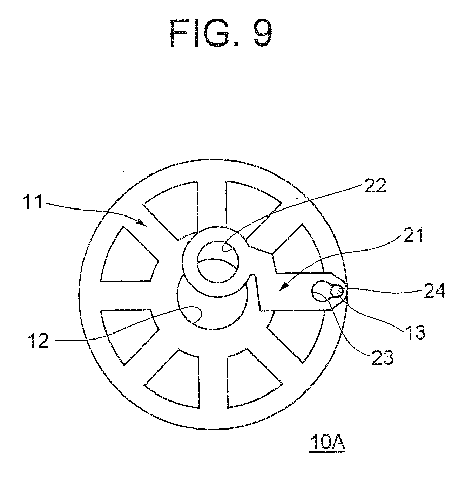

Next, a process after the etching described above (Fig. 7F and fig. 7G) will be described below by referring to Fig. 8 and Fig. 9. Fig. 8 is a top view showing a state before moving the movable member 21, after the etching, and Fig. 9 is a top view showing a state after the movable member 21 is moved, after the etching.

As shown in Fig. 8, when the sacrificing layer is removed by etching, the guide shaft 13 is at the position inside the first groove portion 23 formed in the movable member 21. Next, the movable member 21 is pressed in a direction away from the guide shaft 13 in a plane of the substrate 11, in other words, the movable member 21 is pressed such that the position of the guide shaft 13 changes from the position inside the first groove portion 23 to the position inside the second groove portion 24. Accordingly, the guide shaft 13 is disposed inside the second groove portion 24. At this time, since an outer circumference of the guide shaft 13 makes a contact with an inner wall of the second groove portion 24, rotational movement of the movable member 21 is regulated.

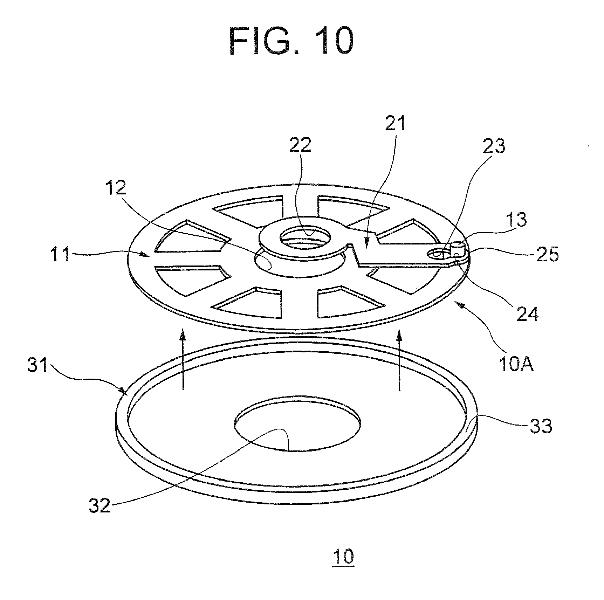

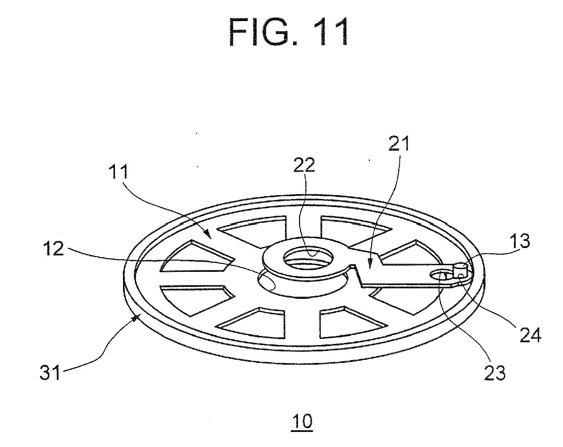

Next, as shown in Fig. 10, an outer circumference and a lower surface of the stacked structure 10A in which the guide shaft 13 is disposed inside the second groove portion 24 are covered by the frame member 31, and an end surface 25 toward the second groove portion 24 of the movable member 21 is brought in contact with a circumferential wall 33 of the frame member 31 (Fig. 11). Accordingly, it is possible to maintain a state in which, the movable member 21 is pressed in a direction away from the guide shaft 13 in the plane of the substrate 11, a state in which the guide shaft 13 is at the position of the second groove portion 24 as shown in Fig. 11 is maintained. Here, Fig. 10 is an exploded perspective view showing an assembled state of the stacked structure 10A and the frame member 31. Fig. 11 is a perspective view showing a state of the light controlling apparatus 10 after assembling.

According to the stacked structure 10A and the light controlling apparatus 10 having the abovementioned structure and method of manufacturing, the following effect is shown.

For manufacturing the stacked structure 10A by using the plating process and the etching process, the clearance δ of the guide shaft 13 and the first groove portion 23 of the movable member 21 has to be made wide. A reason for this is that, when the distance of the first groove portion 23 of the movable member 21 and the guide shaft 13 is small, the sacrificing layer between the guide shaft 13 and the movable member 21 is not etched appropriately. On the other hand, when the clearance is made wide considering an ease of processing, it the movement lacks smoothness at the time of moving the movable member 21. Concretely, since there occurs to be an uneven rotation when the movable member 21 is made to rotate around the guide shaft 13, it is not possible to dispose the second aperture 22 accurately at the desired position.

Whereas, in the stacked structure 10A according to the first embodiment, the first groove portion 23 and the second groove portion 24 are formed continuously in the movable member 21, and the groove portion as a whole is let to have a shape of a keyhole. The guide shaft 13, at the time of removing the sacrificing layer by the etching process, is inside the first groove portion 23 which is a wide position in the keyhole shape, and after the first groove portion 23 and the second groove portion 24 are formed by removing the sacrificing layer, the movable member 21 is pressed toward a direction away from the guide shaft 13 in the plane of the substrate 11. Accordingly, the guide shaft 13 moves into the second groove portion 24 which is a narrow position in the keyhole shape, and furthermore, by the end surface 25 of the movable member 21 being pressed by the circumferential wall 33 of the frame member 31, it becomes possible to maintain the guide shaft 13 inside the second groove portion 24 of the movable member 21 of a small clearance. Consequently, it is possible to manufacture an ultra-small variable aperture unit by using the plating process, the other metal layer formation process, and the etching process, as well as it is possible to make smooth the movement of the movable member 21 due to the clearance around the guide shaft 13.

(Second embodiment)

A stacked structure, a light controlling apparatus, and a method of manufacturing stacked structure according to a second embodiment of the present invention will be described below.

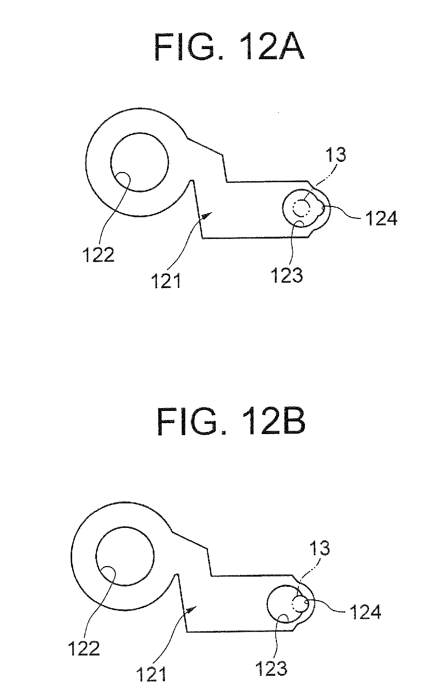

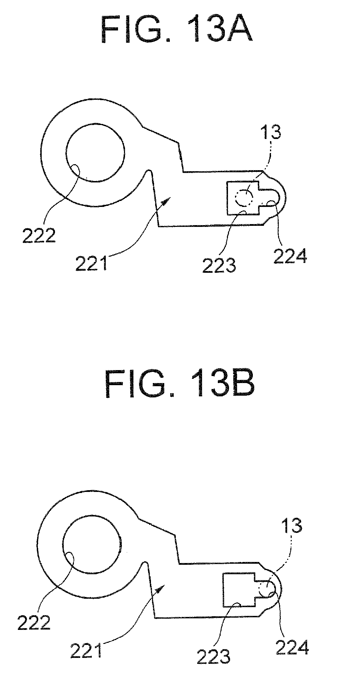

In the first embodiment, the first groove portion 23 and the second groove portion 24 formed in the movable member 21 are let to have a keyhole shape. However, instead of the keyhole shape, it is possible to let the first groove portion 23 and the second groove portion 24 to have shapes as shown in Fig. 12A and Fig. 12B, and Fig. 13A and Fig. 13B. Here, Fig. 12A is a plan view showing a structure of a movable member 121 according to the second embodiment of the present invention, and is a diagram showing a state before moving the movable member 121, after the etching, and Fig. 12B is a plan view showing a state after the movable member 121 is moved, after the etching. Fig. 13A is a plan view showing a structure of a movable member 221 according to a modified embodiment of the second embodiment, and is a diagram showing a state before moving the movable member, after the etching, and Fig. 13B is a plan view showing a state after the movable member 221 is moved, after the etching. The structure other than that of the movable members being similar to the structure as in the first embodiment, the description in detail thereof is omitted.

In the movable member 121 shown in Fig. 12A and Fig. 12B, a substantially circular shaped first groove portion 123 having a first distance, and a semicircular shaped second groove portion 124 having a second distance which is smaller than the first distance are formed continuously. The first groove portion 123 has a first inscribed circle having a diameter same as the first distance, and the second groove portion 124 has a second inscribed circle having a diameter same as the second distance. The first inscribed circle, the second inscribed circle, and the guide shaft 13 satisfy the abovementioned expressions (1) and (2).

Similarly, in the movable member 221 shown in Fig. 13A and Fig. 13B, a substantially rectangular shaped first groove portion 223 having a first distance and a substantially elliptical shaped second groove portion 224 having a second distance which is smaller than the first distance are formed continuously. The first groove portion 223 has a first inscribed circle having a diameter same as the first distance, and the second groove portion 224 has a second inscribed circle having a diameter same as the second distance. The first inscribed circle, the second inscribed circle, and the guide shaft 13 satisfy the abovementioned expressions (1) and (2).

According to the movable member 121 shown in Fig. 12A and Fig. 12B, and the movable member 221 shown in Fig. 13A and Fig. 13B, a distance which enables the etching of the sacrificing layer is maintained from the guide shaft 13, and with one more distance (distance from the second groove portion 124 or the second groove portion 224), the movement of the movable members 121 and 221 is regulated. Consequently, an effect similar to the effect by the stacked structure 10A and the light controlling apparatus 10 is achieved.

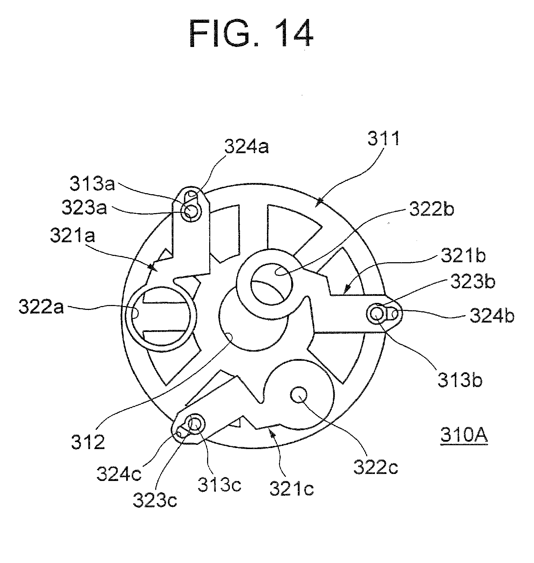

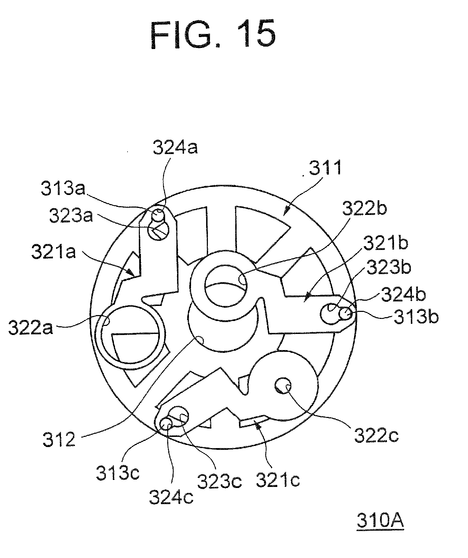

Moreover, in the stacked structure according to the first embodiment and the second embodiment, there is only one movable member. However, even in a case in which the movable members are in plurality as in a stacked structure 310A shown in Fig. 14 and Fig. 15, a similar effect is achieved. Here, Fig. 14 is a top view showing a state before moving movable members 321a, 321b, and 321 c, after the etching. Fig. 15 is a top view showing a state after the movable members 321a, 321b, and 321c are moved, after the etching.

In examples shown in Fig. 14 and Fig. 15, guide shafts 313a, 313b, and 313c are formed at an equiangular distance at an upper surface circumferential portion of a substrate 311 in the form of a substantially circular plate. First groove portions 323a, 323b, and 323c having a first distance, and second groove portions 324a, 324b, and 324c having a second distance which is smaller than the first distance are formed in the movable members 321a, 321b, and 321c respectively. Immediately after the etching, the guide shafts 31 3a, 313b, and 313c are disposed inside the first groove portions 323a, 323b, and 323c respectively, of the movable members 321a, 321b, and 321c. Thereafter, by moving the movable members 321a, 321b, and 321c in a direction away from the guide shafts 313a, 313b, and 313c, the guide shafts 313a, 313b, and 313c are disposed inside the second groove portions 324a, 324b, and 324c respectively. In such structure, the movement of the movable members 321a, 321b, and 321c is regulated by the guide shafts 313a, 313b, and 313c being at the position of the second groove portion. In other words, similarly as in the first embodiment), the clearance of the guide shaft and the second groove portion being small, by disposing the movable member such that the guide shaft comes to the position of the second groove portion, it is possible to move the movable member smoothly. Furthermore, for manufacturing a stacked structure having a complicated shape as shown in Fig. 14 and Fig. 15, and an ultra-small size, using the plating process and the etching process is extremely effective, and moreover, by using the continuous groove portions as described above, it is possible to improve an accuracy of movement of each movable member.

As it has been described above, the stacked structure according to the present invention is formed by the metal layer formation process and the etching process, and is useful in a structure provided with a movable member, and particularly, is suitable for an endoscope apparatus which includes a variable aperture unit.

The stacked structure, the light controlling apparatus, and the method of manufacturing stacked structure according to the present invention show an effect that it is possible to manufacture an ultra-small variable aperture unit as a stacked structure by using the plating process, other metal-layer formation process, and the etching process, and to make smooth a movement of diaphragm blade as the movable member, which is caused due to the clearance around the shaft.

## Claims

1. A stacked structure comprising:

   at least one movable member which is movable; and
   a guide shaft which regulates a movement of the movable member, wherein
   the stacked structure is manufactured by using a metal layer formation process and an etching process, and
   a groove portion having a first distance and a groove portion having a second distance are formed continuously in the movable member, and
   the second distance is smaller than the first distance, and
   the guide shaft regulates the movement of the movable member along the groove portion having the second distance.

2. The stacked structure according to claim 1, wherein the groove portion having the first distance has a first inscribed circle which is inscribed in the groove portion, and the groove portion having the second distance has a second inscribed circle which is inscribed in the groove portion, and a diameter of the first inscribed circle is the first distance, and a diameter of the second inscribed circle is the second distance.

3. The stacked structure according to claim 2, wherein the stacked structure is covered by a frame member which is larger than the stacked structure.

4. The stacked structure according to claim 3, wherein the groove portion having the first distance and the groove portion having the second distance have a substantially circular planar shape and a substantially rectangular planar shape respectively, and are formed to be in mutual continuity.

5. The stacked structure according to claim 1, wherein the stacked structure is covered by a frame member which is larger than the stacked structure.

6. The stacked structure according to claim 5, wherein the groove portion having the first distance and the groove portion having the second distance have a substantial circular planar shape and a substantially rectangular planar shape respectively, and are formed to be in mutual continuity.

7. The stacked structure according to claim 1, wherein the groove portion having the first distance and the groove portion having the second distance have a substantially circular planar shape and a substantially rectangular planar shape respectively, and are formed to be in mutual continuity.

8. A light controlling apparatus comprising:

   a stacked structure, wherein
   the stacked structure includes at least one movable member which is movable, and a guide shaft which regulates a movement of the movable member, and
   the stacked structure is manufactured by using a metal layer formation process and an etching process, and
   a groove portion having a first distance and a groove portion having a second distance are formed continuously in the movable member, and
   the second distance is smaller than the first distance, and
   the guide shaft regulates the movement of the movable member along the groove portion having the second distance, and
   the stacked structure has a substrate in which a first optical aperture is formed, and
   at least one of the movable member includes an optical aperture which is smaller than the first optical aperture, and a shielding section, and
   the movable member, by undergoing a movement by being regulated by the guide shaft, switches to the first optical aperture formed in the substrate and the optical aperture formed in the movable member.

9. The light controlling apparatus according to claim 8, wherein
   the groove portion having the first distance has a first inscribed circle which is inscribed in the groove portion, and the groove portion having the second distance has a second inscribed circle which is inscribed in the groove portion, and
a diameter of the first inscribed circle is the first distance and a diameter of the second inscribed circle is the second distance.

10. The light controlling apparatus according to claim 9, wherein the stacked structure is covered by a frame member which is larger than the stacked structure.

11. The light controlling apparatus according to claim 10, wherein the groove portion having the first distance and the groove portion having the second distance have a substantially circular planar shape and a substantially rectangular planar shape respectively, and are formed to be in mutual continuity.

12. The light controlling apparatus according to claim 11, wherein at least one of the movable member undergoes a rotational movement upon being regulated by the guide shaft, and switches to the first optical aperture formed in the substrate, and the optical aperture formed in the movable member.

13. The light controlling apparatus according to claim 10, wherein at least one of the movable member undergoes rotational movement upon being regulated by the guide shaft, and switches to the first optical aperture formed in the substrate, and the optical aperture formed in the movable member.

14. The light controlling apparatus according to claim 9, wherein at least one of the movable member undergoes rotational movement upon being regulated by the guide shaft, and switches to the first optical aperture formed in the substrate, and the optical aperture formed in the movable member.

15. The light controlling apparatus according to claim 8, wherein the stacked structure is covered by a frame member which is larger than the stacked structure.

16. The light controlling apparatus according to claim 15, wherein the groove portion having the first distance and the groove portion having the second distance have a substantially circular planar shape and a substantially rectangular planar shape respectively, and are formed to be in mutually continuity.

17. The light controlling apparatus according to claim 16, wherein at least one of the movable member undergoes rotational movement upon being regulated by the guide shaft, and switches to the first optical aperture formed in the substrate, and the optical aperture formed in the movable member.

18. The light controlling apparatus according to claim 15,

wherein at least one of the movable member undergoes rotation movement upon being regulated by the guide shaft, and switches to the first optical aperture formed in the substrate, and the optical aperture formed in the movable member.

19. The light controlling apparatus according to claim 8, wherein the groove portion having the first distance and the groove portion having the second distance have a substantially circular planar shape and a substantially rectangular planar shape respectively, and are formed to be in mutual continuity.

20. The light controlling apparatus according to claim 19, wherein at least one of the movable member undergoes rotational movement upon being regulated by the guide shaft, and switches to the first optical aperture formed in the substrate and the optical aperture formed in the movable member.

21. The light controlling apparatus according to claim 8, wherein at least one of the movable member undergoes rotation movement upon being regulated by the guide shaft, and switches to the first optical aperture formed in the substrate, and the optical aperture formed in the movable member.

22. A method of manufacturing stacked structure which is a method for manufacturing a stacked structure which includes at least one movable member which is movable, and a guide shaft which regulates a movement of the movable member, and which is manufactured by using a metal layer formation process and an etching process, comprising:

   a step of forming continuously a groove portion having a first distance and a groove portion having a second distance, in the movable member;
   a step of forming the guide shaft in the groove portion having the first distance; and
   a step of moving a position of the guide shaft from the groove portion having the first distance to the groove portion having the second distance, by moving the movable member, and regulating the movement of the movable member.

23. The method of manufacturing stacked structure according to claim 22, further comprising:

   a step of fitting the stacked structure in the frame member.

24. The method of manufacturing stacked structure according to claim 23, wherein the groove portion having the first distance and the groove portion having the second distance have a substantially circular planar shape and a substantially rectangular planar shape respectively, and are formed to be in mutual

continuity.

# FIG. 1

<u>10</u>

# FIG. 2

<u>10</u>

# FIG. 3

# FIG. 4

# FIG. 5

<u>10</u>

# FIG. 6

FIG.7A

FIG.7B

FIG.7C

FIG.7D

FIG.7E

FIG.7F

FIG.7G

# FIG. 8

# FIG. 9

10A

# FIG. 10

10

# FIG. 11

10

FIG. 12A

FIG. 12B

# FIG. 13A

# FIG. 13B

# FIG. 14

# FIG. 15

310A

# FIG. 16A

542

548

# FIG. 16B

542    546

548

# FIG. 16C

542                    560

546

548

# FIG. 16D

542    556

548

# FIG. 16E

556

548

**EP 2 131 236 A1**

Europäisches Patentamt
European Patent Office
Office européen des brevets

**EUROPEAN SEARCH REPORT**

Application Number

EP 09 16 1449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/129374 A1 (LIN CHUANG-CHIA [US]) 10 July 2003 (2003-07-10) * paragraphs [0021] - [0031]; figures 2,9 * | 1-24 | INV. G03B9/02 |
| A | EP 0 651 273 A (TEXAS INSTRUMENTS INC [US]) 3 May 1995 (1995-05-03) * column 2, line 37 - column 8, line 18 * | 1-24 | |
| A | US 4 740 410 A (MULLER RICHARD S [US] ET AL) 26 April 1988 (1988-04-26) * column 3, line 46 - column 7, line 64; figures 1-25 * | 1-24 | |
| A | US 5 366 587 A (UEDA MINORU [JP] ET AL) 22 November 1994 (1994-11-22) * column 2, line 66 - column 9, line 53 * | 1-24 | |
| A | US 5 705 318 A (MEHREGANY MEHRAN [US] ET AL) 6 January 1998 (1998-01-06) * column 2, line 5 - column 4, line 63 * | 1-24 | TECHNICAL FIELDS SEARCHED (IPC) B81C G03B |

The present search report has been drawn up for all claims

| Place of search | Date of completion of the search | Examiner |
|---|---|---|
| Munich | 22 September 2009 | Piedrafita, Aurelio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

## ANNEX TO THE EUROPEAN SEARCH REPORT
## ON EUROPEAN PATENT APPLICATION NO.

EP 09 16 1449

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2009

| Patent document cited in search report | | Publication date | Patent family member(s) | | Publication date |
|---|---|---|---|---|---|
| US 2003129374 | A1 | 10-07-2003 | EP | 1325885 A2 | 09-07-2003 |
| | | | JP | 4313576 B2 | 12-08-2009 |
| | | | JP | 2003260699 A | 16-09-2003 |
| EP 0651273 | A | 03-05-1995 | JP | 7234366 A | 05-09-1995 |
| | | | US | 5459602 A | 17-10-1995 |
| US 4740410 | A | 26-04-1988 | NONE | | |
| US 5366587 | A | 22-11-1994 | CA | 2069227 A1 | 25-11-1992 |
| | | | DE | 69218667 D1 | 07-05-1997 |
| | | | DE | 69218667 T2 | 25-09-1997 |
| | | | EP | 0518112 A1 | 16-12-1992 |
| US 5705318 | A | 06-01-1998 | WO | 9534124 A1 | 14-12-1995 |

EPO FORM P0459

For more details about this annex : see Official Journal of the European Patent Office, No. 12/82

**EP 2 131 236 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001355095 A